# EUROPEAN PATENT APPLICATION

(11) **EP 3 381 271 A1**
(43) Date of publication of application: **03.10.2018**
(21) Application number: 17164343.0
(22) Date of filing: 31.03.2017
(51) Int. Cl.: A01G 25/14

(54) **PLANT IRRIGATION DISPENSER AND METHOD FOR CONTROLLING DISPENSING**

(71) Applicant: 4D Holdings, LLC., California 91607 (US)
(72) Inventor: Marshall, Aaron, Valley Village, California 91607 (US)
(74) Representative: WP Thompson

(57) **Abstract**

A plant irrigation dispenser (100) and method (300) controllably dispenses nutritional compositions (160) to a plant. The dispenser (100) comprises a housing (102) defined by a first end (108) and a second end (110) that forms a channel (112). Impaling members (114) form at the second end (110) of the housing (102). The housing (102) encloses multiple chambers (118) that contain the nutritional composition (160). The chambers (118) have a filling end (122) and a dispensing end (124) that forms an opening (126). A membrane (166) seals the opening (126). Rotatably manipulating and axially displacing the chambers (118) in relation to the housing (102) allows the impaling members (114) to tear the membrane (166), so that the nutritional compositions (160) flows through the openings (126), and onto the plant. A valve assembly (146) retains and manipulates plugs (150) in alignment with the openings (126) to selectively couple and decouple the respective openings (126).

## Description

### Cross Reference of Related Applications

This application claims the benefits of U.S. provisional application no. 62310296, filed MARCH 18, 2016 and entitled MULTI-CHAMBER BOTTLING APPARATUS AND SYSTEM, which provisional application is incorporated by reference herein in its entirety.

### Field of the Invention

The present invention relates generally to a plant irrigation dispenser and method for controlled dispensing. More so, the present invention relates to a plant irrigation dispenser that selectively and controllably dispenses nutritional compositions to a plant for irrigation, oxygenation, and feeding; whereby the plant irrigation dispenser provides a housing defined by a first end and a second end that forms a channel and includes a plurality of impaling members; whereby the housing is sized to house a plurality of chambers that are defined by a filling end and a dispensing end that forms an opening; whereby the chambers are sized to contain a plurality of nutritional compositions; whereby rotatably manipulating and axially displacing the chambers in relation to the housing works to tear a membrane that covers the openings of the chambers, so that the nutritional compositions is free to flow through the channel in the housing onto the plant; whereby a press is in communication with the nutritional compositions in the chambers, so that axially displacing the press in a downward direction forces the nutritional compositions through the opening in the chambers; and whereby a valve assembly for manipulating a plurality of plugs that are aligned with the openings in the chambers works to selectively couple and decouple the respective openings, so as to restrict and enable flowage of the nutritional compositions through the openings in the chambers, and through the channel in the housing, and finally onto the plant.

### Background of the Invention

The following background information may present examples of specific aspects of the prior art (e.g., without limitation, approaches, facts, or common wisdom) that, while expected to be helpful to further educate the reader as to additional aspects of the prior art, is not to be construed as limiting the present invention, or any embodiments thereof, to anything stated or implied therein or inferred thereupon.

It is known in the art that for optimizing plant growth, it is desirable that the plant be supplied with nutriment at an essentially constant rate, e.g. that the concentration of nutrient to which the root structure of the plant is exposed be maintained at an essentially constant predetermined level or range. Often, nutriments, such as fertilizer, mineral trace elements, etc., are administered intermittently, e.g. by occasional applications of fertilizer. As a result, the plant is exposed to high concentrations of nutriments directly after feeding, a procedure which may be dangerous to the plant and which is wasteful of the nutriment.

In many instances, plants require feeding or otherwise supplementing with liquid nutrition at least once weekly to grow and survive. This may be accomplished by using an irrigation bottling apparatus and feeding system, which typically involves the use of separate bottles due to the composition of the ingredients in which such ingredients should not be mixed prior to being placed into a reservoir with water. If the ingredients are previously mixed and set with one another long enough, the ingredients can become compromised and ineffective.

Various plant feeding apparatus and systems have been developed, but such conventional apparatus and systems are not specifically designed for consolidation of the feeding process. It would thus be desirable to have an improved apparatus and system for feeding plants and the like, which avoids the disadvantages of the known apparatus and systems.

Other proposals have involved controlled dispensing of nutritional liquids to feed plants. The problem with these plant feeding apparatus and systems is that they do not consolidate the feeding process. Also, the dispensed ingredients for the nutritional composition are difficult to mix and controllably dispense. Even though the above cited plant feeding apparatus and systems meet some of the needs of the market, a plant irrigation dispenser and method for controlled dispensing that selectively and controllably dispenses a plurality of nutritional compositions to a plant for irrigation, oxygenation, and feeding; whereby the plant irrigation dispenser provides a housing, a plurality of chambers sealed with a membrane, an impaling device to puncture the membrane, a capping member to enable application of rotational and axial forces, and a valve assembly to regulate flow of nutritional composition is still desired.

### Summary

Illustrative embodiments of the disclosure are generally directed to a plant irrigation dispenser and method of selective dispensing nutritional compositions on a plant. The plant irrigation dispenser is configured to selectively and controllably dispense a plurality of nutritional compositions to a plant for irrigation, oxygenation, and feeding. The nutritional compositions may be dispensed together onto the plant, or dispensed independently of each other, so that only a portion of the nutritional compositions are dispensed at any one time.

In accordance with a first aspect of the invention, a plant irrigation dispenser comprises:
a housing defined by a housing sidewall forming an enclosed region, a first end, and a second end, the second end forming a channel in communication with the enclosed region, the housing sidewall defined by an air bleed valve configured to enable passage of air into the enclosed region of the housing;
a plurality of impaling members disposed at the second end of the housing;
a plurality of chambers substantially encased in the enclosed region of the housing, the plurality of chambers defined by a chamber sidewall forming a plurality of chamber cavities, a filling end, and a dispensing end, the dispensing end of the plurality of chambers defined by a plurality of openings, the plurality of chambers further defined by multiple longitudinal dividers segregating each chamber;
a membrane disposed to at least partially cover the plurality of openings of the plurality of chambers; and
a valve assembly defined by a valve handle and a plurality of receptacles, the plurality of receptacles configured to retain a plurality of plugs, the plurality of plugs configured to align with and form a snug mating relationship with the plurality of openings, whereby mating the plurality of plugs with the plurality of openings of the plurality of chambers at least partially restricts passage through the plurality of openings.

In accordance with a second aspect of the invention, a plant irrigation dispenser comprises:
a housing defined by a housing sidewall forming an enclosed region, a first end, and a second end, the second end forming a channel in communication with the enclosed region, the housing sidewall defined by an air bleed valve configured to enable passage of air into the enclosed region of the housing;
a plurality of impaling members disposed at the second end of the housing;
a plurality of chambers substantially encased in the enclosed region of the housing, the plurality of chambers defined by a chamber sidewall forming a plurality of chamber cavities, a filling end, and a dispensing end, the dispensing end of the plurality of chambers defined by a plurality of openings, the plurality of chambers further defined by multiple longitudinal dividers segregating each chamber;
a membrane disposed to at least partially cover the plurality of openings of the plurality of chambers;
a press configured to slide along the length of the plurality of chamber cavities, the press defined by a press sidewall, a bottom panel, a cap end, and multiple longitudinal slots extending at least partially from the bottom panel to the cap end, the multiple longitudinal slots being configured to receive and slide along the multiple longitudinal dividers segregating each chamber,
whereby an axial force displaces the press through the plurality of chamber cavities;
a capping member detachably coupled to the cap end of the press, the capping member comprising multiple ridges that mate with the multiple longitudinal slots at the cap end of the press,
whereby applying a rotational torque and the axial force to the capping member rotates and axially displaces the press and the plurality of chambers,
whereby the rotation and axial displacement of the plurality of chambers engages the membrane with the plurality of impaling members,
whereby the membrane is configured to at least partially tear when the membrane engages the plurality of impaling members; and
a valve assembly defined by a valve handle and a plurality of receptacles, the plurality of receptacles configured to retain a plurality of plugs, the plurality of plugs configured to align with and form a snug mating relationship with the plurality of openings,
whereby mating the plurality of plugs with the plurality of openings of the plurality of chambers at least partially restricts passage through the plurality of openings.

In some embodiments, the plant irrigation dispenser provides a housing that encloses a substantial portion of the components of the device. The housing is defined by a housing sidewall that forms an enclosed region, a first end, and a second end. The second end forms a channel that is in communication with the enclosed region and the outside of the housing. An air bleed valve forms in the housing sidewall to enable entry of air into the enclosed region of the housing. A plurality of impaling members extend inwardly from the second end to the first end. In one embodiment, the impaling members are configured to tear, or puncture a membrane that covers the opening of the chambers. In this manner, the nutritional composition in the chambers may flow for dispensing.

In some embodiments, the housing is sized and dimensioned to house a plurality of chambers. Each chamber stores and dispenses a nutritional composition. The chambers may follow various shapes and dimensions, such as a radial arrangement of cylindrical chambers, or a linear arrangement of square chambers. The chambers may be segregated by a plurality of longitudinal dividers.

The chambers are defined by a filling end and a dispensing end that forms an opening. The chamber sidewall, the filling end, and the dispensing end form a chamber cavity in which the nutritional composition is contained. In one embodiment, the chamber cavity for each chamber is sized to contain a plurality of nutritional compositions, with each chamber containing a different nutritional composition, in one embodiment.

The nutritional composition dispenses form at least one of the plurality of chambers. An air bleed valve at the dispensing end of the housing permits the passage of air and nutritional composition from the chamber cavities, through the enclosed region of the housing, and finally through the channel for dispensing. Upon dispensing of the nutritional composition from at least one of the chambers, a combination of any compositions may be dispensed for use by the plant.

In one embodiment, a membrane may cover the openings of the chambers. The membrane inhibits passage of the nutritional composition until the membrane is torn or punctured, as described below.

In some embodiments, the dispenser provides a press to forcible displace the nutritional composition from the chamber. The press is in communication with the nutritional compositions in the chamber cavity for each chamber. A downward axial force may be applied to the press, such that the press slides through the chamber cavities, from the filling end to the dispensing end. This works to force the nutritional compositions through the openings in the chambers.

The press is defined by a sidewall, a bottom panel, a cap end, and multiple longitudinal slots extending from the bottom panel to the cap end. The slots of the press are sized and dimensioned to receive, and slide along, the longitudinal dividers that segregate the individual chambers. This enables the press to control movement in the chambers when the longitudinal dividers are fits into the longitudinal slots. The bottom panel forms a snug fit with the chamber sidewalls to create sufficient pressure to force the nutritional composition towards the opening in the chamber. In this manner, axially displacing the press in a downward direction forces the nutritional compositions through the opening in the chambers.

In some embodiments, a capping member may couple to the cap end of the press. The capping member may have multiple ridges that fit into the slots at the cap end of the press. This mating relationship enables the application of a rotational torque and an axial force on the capping member, which then rotatably manipulates and axial displaces the press along the chambers.

Consequently, this rotatable and axial manipulation of the chambers works to tear a membrane that covers the openings of the chambers works to tear the membrane that covers each opening of the chambers. After the membrane is torn, punctured, or ripped, the nutritional compositions is free to flow through the openings, and through the channel in the housing onto the plant.

In some embodiments, a valve assembly is used to selectively block and enable passage through the openings in the dispensing end of the chambers. This may be useful after the membrane has been torn, and the openings are not covered. The valve assembly comprises a plurality of receptacles that retain a plurality of plugs in alignment with the openings in the chambers. The plugs are sized to selectively couple and decouple the plugs with their respective openings, so as to restrict and enable flowage of the nutritional compositions through the openings in the chambers, and through the channel in the housing, and finally onto the plant.

In another aspect, the housing has a cylindrical shape.

In another aspect, the plurality of impaling members are oriented towards the first end of the housing.

In another aspect, the plurality of impaling members are sharp.

In another aspect, the plurality of chambers comprises six chambers.

In another aspect, the plurality of chambers are disposed in a radial arrangement.

In another aspect, the plurality of chamber cavities are configured to contain a plurality of nutritional compositions.

In another aspect, the capping member has a generally disc-shape.

In another aspect, the valve assembly comprises a valve handle.

In another aspect, the valve assembly comprises a plurality of receptacles configured to retain the plurality of plugs.

In another aspect, the valve assembly has a generally circular shape that aligns with the plurality of openings in the dispensing end of the plurality of openings.

In another aspect, the plurality of plugs are configured to form a friction fit relationship with the plurality of openings formed in the dispensing end of the plurality of chambers.

In another aspect, the dispenser further comprises a plurality of chamber caps configured to detachably attach to the plurality of openings, the plurality of chamber caps defined by an orifice.

In another aspect, the plurality of plugs are configured to form a friction fit relationship with the orifice.

In another aspect, the valve handle passes through the channel in the housing.

In another aspect, the dispenser further comprises a valve plunger disposed between the membrane and the second end of the housing, the valve plunger configured to at least partially block passage through the channel in the housing.

In another aspect, the dispenser further comprises a sleeve disposed between the housing and the plurality of chambers.

In another aspect, the membrane comprises six small membranes configured to cover each opening for each chamber separately.

In another aspect, the plurality of chambers comprises a generally square shape, the plurality of chambers disposed in a linear arrangement.

In another aspect, the housing has a generally cubicle shape.

In another aspect, the capping member comprises a cap handle configured to enable facilitated rotation of the capping member.

In yet another possible embodiment of the dispenser, there is provided herein a multi-chamber bottling dispenser for consolidating the feeding process of plants with liquids, nutrients and/or fertilizers contained in a single bottle or container or for consolidating the drinking or feeding process of users with a plurality of plurality of nutritional compositions. The nutritional compositions may include, without limitation, water, drink mixtures, nutrients, fertilizers, nutrients, plant enhancement ingredients, and other ingredients for consumption by a plant, animal, or human.

The dispenser includes a geometrically shaped housing of variable size having a first end and a second end, an outer capping member secured to the first end of the housing, and a valve assembly slidably disposed at the second end of the housing. The housing is configured to cover the valve assembly and form a pathway for nutritional compositions to funnel out of the channel in the second end of the housing.

The dispenser further includes a plurality of chambers that are sized and dimensioned to containing the plurality of nutritional compositions. The chambers are enclosed inside the housing. The chambers are defined by a filling end and a dispensing end that forms an opening. An inner capping member detachably covers the filling end of the chambers. Each nutritional composition is segregated in one of the chambers. A plurality of chamber caps detachably couple to the respective openings in the chambers. The chamber caps seal the chambers while the valve holder remains in a non-pulled position.

In some embodiments, the plurality of caps secure the plurality of chambers in place and funnel the nutritional compositions into a channel when the valve holder is in a pulled position. In other embodiments, the capping member is secured to the housing by a bayonet mechanism, thread and the like.

In some embodiments, the valve assembly is secured to the housing by at least one of ultrasonic welding, adhesive bonding, friction and the like.

In some embodiments, the valve assembly is configured to extend downwardly from a valve holder assembly of variable size and shape.

In some embodiments, the valve assembly is configured to slidably receive a plurality of plugs from top of the assembly.

In some embodiments, the plugs are connected to the valve holder assembly and are configured to enter the plurality of caps for closing the chamber opening when the valve holder is in a non-pulled position.

In some embodiments, when the valve assembly is pulled down by the user, the plurality of plugs are lowered from the plurality of openings, which allow the nutritional compositions contained in the chambers to exit the bottom of the valve assembly through the channel in the housing, and at the same time and be mixed together.

In some embodiments, the nutritional compositions contained in the chambers use gravity to exit the chambers.

In some embodiments, the housing is geometrically shaped as a cylinder.

In some embodiments, the dispenser is configured to be disposable after one or more uses or reusable after several prior uses.

In some embodiments, the dispenser can be made by at least one of the following processes: blow molding, roto molding, gas assisted injection molding, injection molding, and the like.

In some embodiments, the dispenser can be fabricated of at least one of the following materials: high-density polyethylene (HDPE), polyethylene (PE), and polypropylene (PP), styrene, acrylonitrile butadiene styrene (ABS), and polycarbonate (PC), Delrin, urethane, rubber, thermoplastic rubber, silicon, and the like.

Various advantages of this disclosure will become apparent to those skilled in the art from the following detailed description, when read in light of the accompanying drawings. Other systems, dispensers, methods, features, and advantages will be or become apparent to one with skill in the art upon examination of the following drawings and detailed description. It is intended that all such additional systems, methods, features, and advantages be included within this description, be within the scope of the present disclosure, and be protected by the accompanying claims and drawings.

### Brief Description of the Drawings

The invention will now be described, by way of example, with reference to the accompanying drawings, in which:
FIG. 1A is a side perspective view of an exemplary housing of a plant irrigation dispenser, according to the present disclosure, in accordance with an embodiment of the present invention;
FIG. 1B is a side plan view of the housing of the plant irrigation dispenser of FIG. 1A, according to the present disclosure, in accordance with an embodiment of the present invention;
FIG. 1C is a top plan view of an exemplary capping member of the housing of FIG. 1B, according to the present disclosure, in accordance with an embodiment of the present invention;
FIG. 1D is a bottom plan view of the valve holder of the housing of FIG. 1B, according to the present disclosure, in accordance with an embodiment of the present invention;
FIG. 2A is a side perspective view of the plant irrigation dispenser of FIG. 1A showing the plurality of chambers contained in the housing, in accordance with an embodiment of the present invention;
FIG. 2B is a side plan view of the chambers of FIG. 1B, in accordance with an embodiment of the present invention;
FIG. 2C is a top plan view of the chambers and a valve assembly retaining plugs, in accordance with an embodiment of the present invention;
FIG. 2D is a top plan view of the valve assembly operational with the chambers, in accordance with an embodiment of the present invention;
FIG. 3A is a side perspective view of the chambers of FIG. 2A shown with the valve holder pulled down, in accordance with an embodiment of the present invention;
FIG. 3B is a side plan view of the chambers of FIG. 2B shown with the valve holder pulled down, in accordance with an embodiment of the present invention;
FIG. 4 is a cross-sectional view of the chambers of FIG. 1A showing the movement of nutritional composition when the valve assembly is pulled down to decouple the plugs from the openings in the chambers, in accordance with an embodiment of the present invention;
FIG. 5 is an assembled view of the chambers and the valve assembly of FIG. 1A, in accordance with an embodiment of the present invention;
FIG. 6 is an exploded view of the chambers and the valve assembly of FIG. 1A, in accordance with an embodiment of the present invention;
FIG. 7 illustrates a sectioned view of the chambers containing different nutritional compositions, in accordance with an embodiment of the present invention;
FIG. 8 illustrates a perspective view of a rotational torque applied to a capping member to tear the membranes covering the opening in the chambers, and the changes in positioning by the chambers upon rotation, in accordance with an embodiment of the present invention;
FIG. 9 illustrates a sectioned view of the chambers dispensing the nutritional compositions, in accordance with an embodiment of the present invention;
FIGs. 10A, 10B, and 10C illustrate a sectioned view of the chambers dispensing nutritional composition as the valve assembly is pulled through the channel, where FIG. 10A is the valve assembly in the non-pulled position, FIG. 10B shows the valve handle being pulled, and FIG. 10C shows the plugs decoupling from the openings in the chambers, in accordance with an embodiment of the present invention;
FIG. 11 illustrates a perspective view of the housing, the chambers, and an exemplary press operational with the chambers, in accordance with an embodiment of the present invention;
FIG. 12 illustrates an assembled view of the housing, the chambers, and an exemplary press operational with the chambers, in accordance with an embodiment of the present invention;
FIG. 13 illustrates a blow up view of the housing, the chambers, and an exemplary press operational with the chambers, in accordance with an embodiment of the present invention;
FIG. 14 illustrates a sectioned view of the housing, the chambers, and an exemplary sleeve disposed between the housing and the chambers, in accordance with an embodiment of the present invention;
FIG. 15 illustrates a sectioned view of the housing, the chambers, and the sleeve, showing the nutritional composition being dispensed through the openings in the chamber and the channel in the housing, in accordance with an embodiment of the present invention;
FIGs. 16A, 16B, and 16C illustrate a sectioned view of the chambers dispensing nutritional composition as the press applies an axial force on the nutritional compositions in the chambers, where FIG. 16A is the press in a top position, FIG. 16B shows the press being axially displaced, and FIG. 16C shows press forcing a substantial amount of the nutritional composition form the chambers, in accordance with an embodiment of the present invention;
FIG. 17 illustrates an assembled view of the housing, the chambers, and an exemplary capping member with ridges that mate with the slots in the chambers, in accordance with an embodiment of the present invention;
FIG. 18 illustrates a blow up view of the housing, the chambers, and an exemplary capping member with ridges that mate with the slots in the chambers, in accordance with an embodiment of the present invention;
FIG. 19 illustrates a perspective view of an alternative embodiment of the plant irrigation dispenser, showing the housing having a cubicle shape and the chambers having a square shape, in accordance with an embodiment of the present invention;
FIGs. 20A, 20B, and 20C illustrate sectioned views of the alternative embodiment of the plant irrigation dispenser, showing the nutritional composition being dispensed, where FIG. 20A is the valve assembly in the non-pulled position, FIG. 20B shows the valve handle being pulled, and FIG. 20C shows the plugs decoupling from the openings in the chambers, in accordance with an embodiment of the present invention; and
FIG. 21 references a flowchart for an exemplary method for dispensing a nutritional composition from a plant irrigation dispenser, in accordance with an embodiment of the present invention.

Like reference numerals refer to like parts throughout the various views of the drawings.

### Detailed Description of the Invention

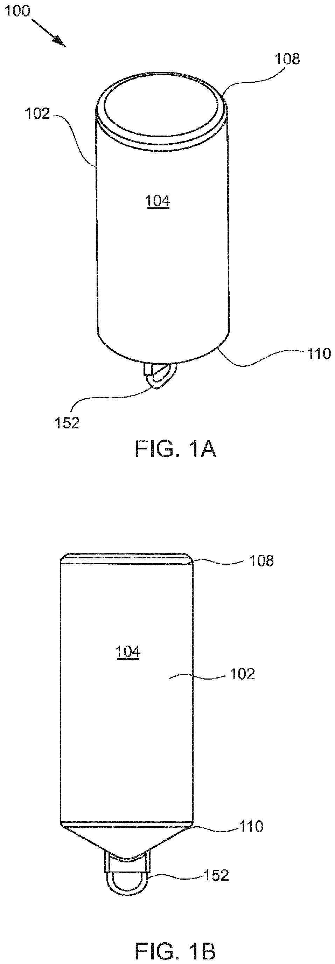

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper," "lower," "left," "rear," "right," "front," "vertical," "horizontal," and derivatives thereof shall relate to the invention as oriented in FIG. 1A. Furthermore, there is no intention to be bound by any expressed or implied theory presented in the preceding technical field, background, brief summary or the following detailed description. It is also to be understood that the specific dispensers and processes illustrated in the attached drawings, and described in the following specification, are simply exemplary embodiments of the inventive concepts defined in the appended claims. Specific dimensions and other physical characteristics relating to the embodiments disclosed herein are therefore not to be considered as limiting, unless the claims expressly state otherwise.

A plant irrigation dispenser 100 and method 300 of selective dispensing nutritional compositions on a plant is referenced in FIGs. 1A-21. The plant irrigation dispenser 100 is configured to selectively and controllably dispense a plurality of nutritional compositions 160a, 160b, 160c to a plant for irrigation, oxygenation, and feeding. The nutritional compositions 160a-c are stored and dispensed, so that they can be dispensed together onto the plant, or dispensed independently of each other, so that only a portion of the nutritional compositions are dispensed at any one time.

The nutritional compositions 160a-c are contained in a plurality of chambers 118a-f that use gravity and forcible axial displacement to dispense of the nutritional compositions 160a-c contained therein. The dispenser 100 enables a controlled, selective dispensing means controlled through manipulation and impalement of a press 132, a membrane 166, a valve assembly 146 and plugs 150a-f, and chamber caps 158a-d. In this manner, the nutritional composition 160a-c can be applied to the plant in a controlled manner that allows for selective mixing of different nutritional compositions and drip irrigation.

In one embodiment, the plant irrigation dispenser 100, hereafter "dispenser 100", is operational to consolidate the feeding process of plants with pre-packaged, or non-prepackaged nutritional composition 160a-c, such as liquids, nutrients and/or fertilizers contained within the chambers or a single bottle or container. This eliminates the need for use of multiple bottles or containers in the feeding process. The term "pre-packaged" means that the dispenser 100 is manufactured with an entire formulation or recipe contained in a single bottle or container allowing for easy use by the end consumer. The term "non-pre-packaged" means that the user adds the ingredients to the dispenser 10 rather than purchasing the dispenser 100 with pre-packaged ingredients for use in feeding plants and the like.

The dispenser 100 may also be used for consolidating the drinking or feeding process of the user with various pre-packaged (or non-prepackaged) drink mixtures, nutrients and/or other ingredients contained within a single bottle or container for consumption by the user.

In addition to the advantages set forth above, the dispenser 100 provide efficiency in the feeding process; the dispenser is fabricated from inexpensive materials with a low cost to manufacture; the dispenser provides a compact design for packaging and shipping, is easy to assemble and use, and is disposable or reusable, among other desirable features as described herein. It is contemplated by the present disclosure that the multi-chamber bottling dispenser and system may be used with any suitable plant growing medium (e.g., Rockwool, soil, and the like) in a substrate growing system.

For purposes of the present disclosure: The terms "feeding" and "watering" are used interchangeably herein and are intended to have the same meaning with respect to the treating of a plant with liquid nutrition so that the plant may grow and flourish. The term "irrigation" refers to the application of water to soil or another medium by artificial means to foster plant growth. The terms "growing medium," "medium," or "media" refer to a liquid or solid in which organic structures such as plants are placed to grow. The term "nutritional composition" refers to any form of liquid nutrition for a plant, including water and the like. The term "Rockwool" refers to the inorganic mineral based horticultural grade Rockwool primarily sold as a hydroponic substrate in the horticultural industry. The phrase "substrate growing system" is a hydroponic system in which the root zone is physically supported by media and the plants are fed by applying nutrient solution to the media. The terms "multi-chamber bottling dispenser" and "dispenser" are used interchangeably herein.

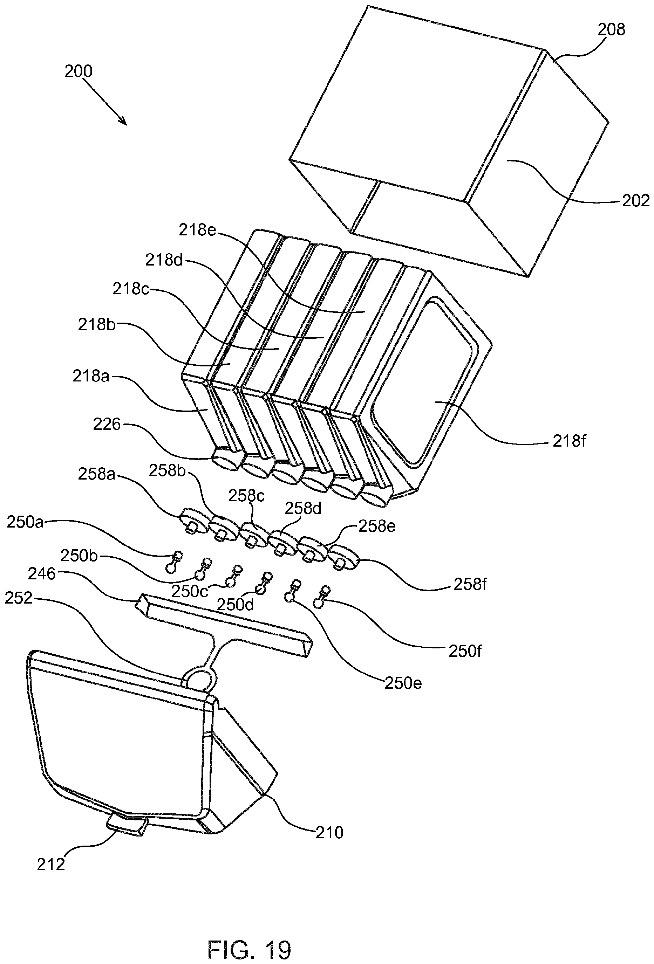

FIGS. 1A-6 are various views of an exemplary embodiment of the dispenser 100 in accordance with the present disclosure. Specifically, as shown in FIGS. 1A and 1B, the dispenser 100 includes a geometrically shaped housing 102 of variable size that encloses a substantial portion of the components of the dispenser 100. The housing 102 is defined by a housing sidewall 104 that forms an enclosed region 106, a first end 108, and a second end 110. The second end 110 forms a channel 112 that is in communication with the enclosed region 106 and the outside of the housing 102. The housing 102 may have a cylindrical shape. Though in other embodiments illustrated below in FIG. 19, the housing 102 may have a cubicle shape and the first and second ends 108,110 may separate to enclose a plurality of chambers 118a-f.

The housing 102 also provides a channel 112 that forms a pathway for nutritional composition 160a-cs to funnel out of the channel 112 at the second end 110. The housing 102 is also configured to cover a valve assembly 146 that regulates dispensing of the nutritional composition 160a-c. The valve assembly 146 can be secured to the housing 102 by ultrasonic welding, adhesive bonding, friction and the like.

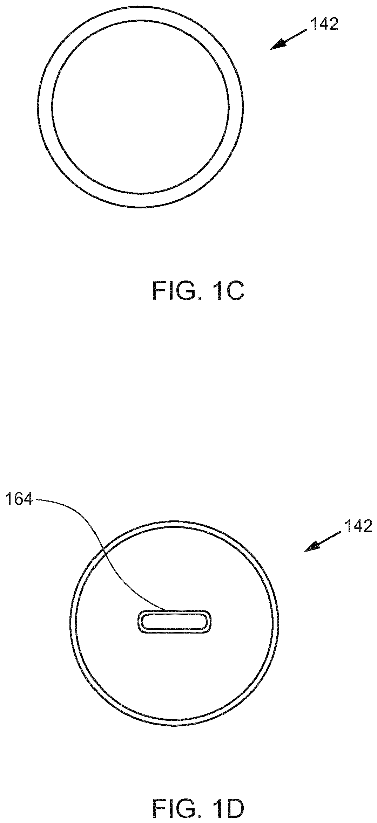

As shown in FIGs. 1C and 1D, a capping member 142 can be secured to the housing 102 by bayonet mechanism, thread and the like. A friction fit coupling mechanism may also be used to couple the capping member 142 to the chamber 118a-f and housing 102. The capping member 142 facilitates application of a rotational torque 170 and an axial force 172 that are applied to the chambers 118a-f in the housing 102, as discussed below.

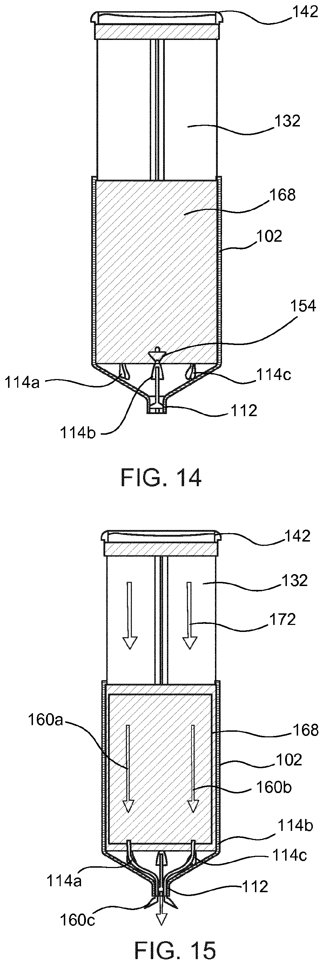

As referenced in FIG. 14, a plurality of impaling members 114a-d extend inwardly from the second end 110 to the first end 108. In one embodiment, the impaling members 114a-d are configured to tear, puncture, or damage a membrane 166 that seals the opening of the chambers 118a-f. In this manner, the nutritional composition 160a-c that is contained in the chambers 118a-f may flow out for dispensing onto the plant. This tearing of the membrane is performed by applying a rotational torque 170 and an axial force 172 to the chambers 118a-f, so that the membrane 166 engages the impaling members 114a-d in an agitating manner, causing the membrane 166 to tear, puncture, or be forcible removed.

In some embodiments, the impaling members 114a-d are spikes that are oriented towards the first end 108 of the housing 102. Though in other embodiments, the impaling members 114a-d may include any sharp or serrated mechanism configured to tear, puncture, or damage a membrane 166, as discussed below. Additionally, an air bleed valve 116 forms in the housing sidewall 104 to enable entry of air into the enclosed region 106 of the housing 102.

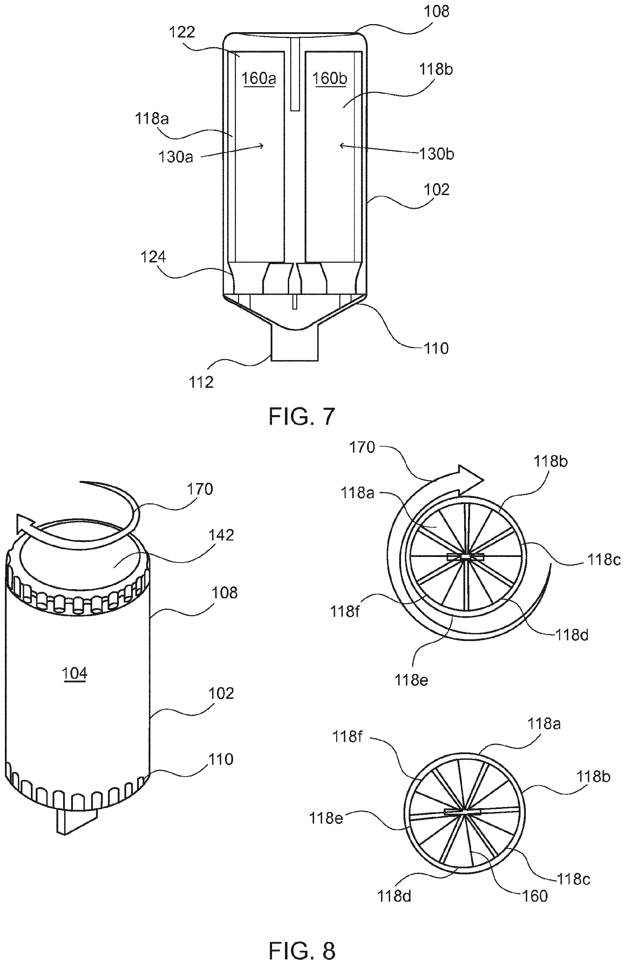

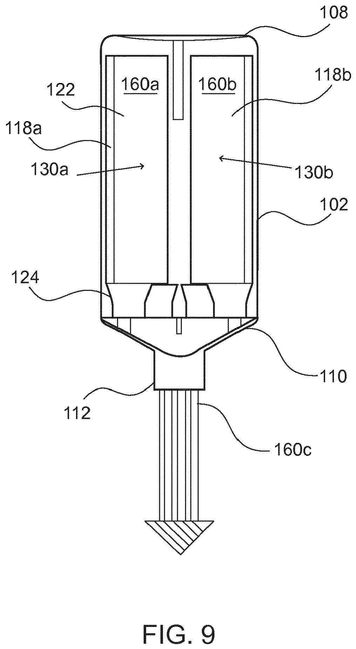

The rotational and axial manipulation that is applied to tear the membrane 166 is illustrated in FIGs. 7, 8, and 9. In this series of rotational manipulations, FIG. 7 illustrates a sectioned view of the chambers 118a-f containing different nutritional compositions 160a-c. FIG. 8 illustrates a perspective view of a rotational torque 170 applied to the capping member 142, so as to tear the membranes 166 covering the openings 126 in the chambers 118a-f. As the rotational torque 170 is applied, the position of the chambers 118a-f changes upon rotation. Finally, FIG. 9 illustrates the nutritional composition 160a-cs dispensing from the chambers 118a-f, since the sealing effect of the membrane 166 has been removed.

In some embodiments, the housing 102 is sized and dimensioned to at least partially enclose a plurality of chambers 118a-f. Each chamber 118a-f stores and dispenses a nutritional composition 160a-c. The chambers 118a-f may follow various shapes and dimensions, such as a radial arrangement of six cylindrical chambers 118a-f, or a linear arrangement of six square chambers 218a-f. The chambers 118a-f may be segregated by a plurality of longitudinal dividers 120a-e. In one embodiment, the chambers 118a-f have equal sizes and are symmetrical in their radial arrangement.

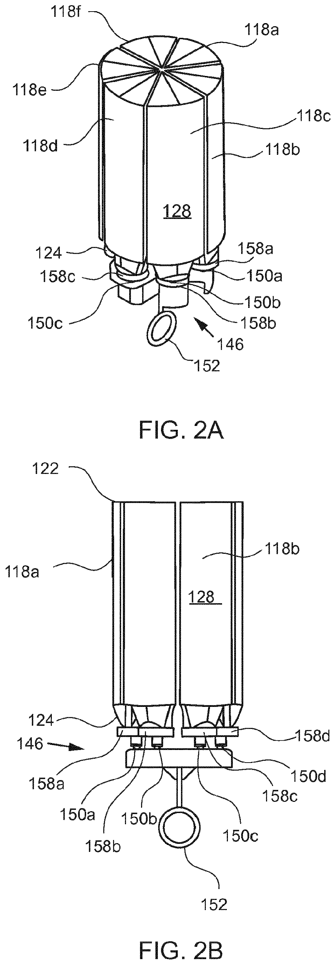

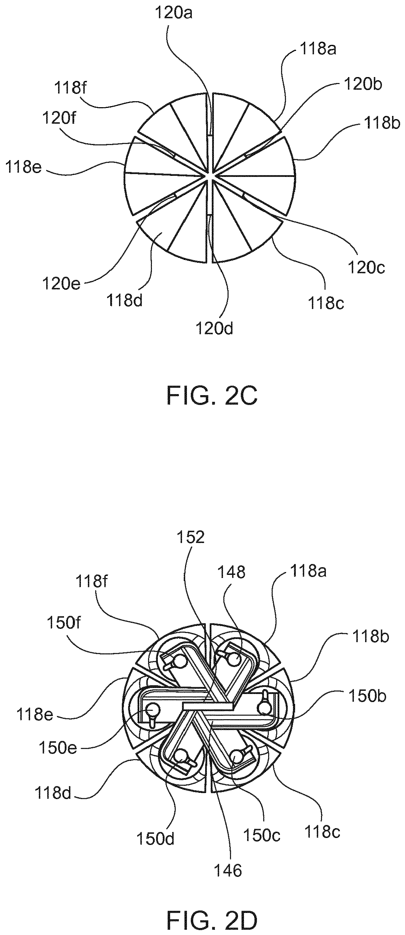

Turning now to FIGs. 2A, 2B, and 2C, the chambers 118a-f are defined by a filling end 122 and a dispensing end 124 that forms an opening through which the nutritional composition 160a-c dispenses. The chamber sidewall 128, the filling end 122, and the dispensing end 124 form a plurality of chamber cavities 130a, 130b in which the nutritional composition 160a-c is contained. In one embodiment, the chamber cavity for each chamber is sized to contain a plurality of nutritional composition 160a-cs, with each chamber cavity containing a different nutritional composition 160a-c.

It should be understood that the chambers 118a-f can be configured of any suitable geometric shape and size as the dispenser 100 is a scalable design solution. It should be further understood that the volume of nutritional composition 160a-c, liquids, nutrients and fertilizers that the plurality of chambers 118a-f can hold varies as the dispenser 100 is sized to scale.

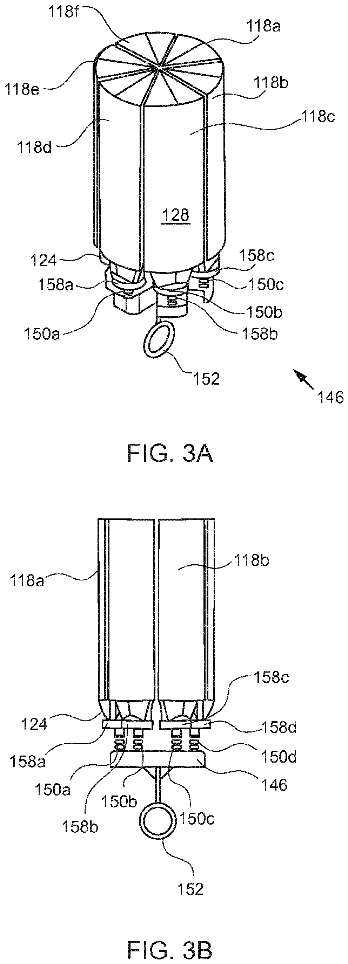

As the illustration in FIG. 2D shows, the nutritional composition 160a-c dispenses from the opening 126 of at least one of the chambers 118a-f. In one embodiment, a plurality of chamber caps 158a-d detachably attach to the openings 126 (FIG. 3A). The chamber caps 158a-d detachably cover the opening 126. The chamber caps 158a-d are defined by a wall that forms an orifice 162. The orifice 162 enables passage of a small, controlled amount of nutritional composition 160a-c to pass through. As discussed below, the orifice 162 may be plugged up with a plurality of plugs 150a-f controlled by a valve assembly 146. FIGs. 3B and 3C show the plugs 150a-f detached from the orifice 162s in the chamber caps 158a-d, so as to enable flowage of nutritional composition 160a-c.

The nutritional composition 160a-c is generally viscous enough to flow freely through the openings 126 in the chambers 118a-f and the channel 112 in the housing 102. In some embodiments, the nutritional composition 160a-cs may include, without limitation, water, drink mixtures, nutrients, fertilizers, nutrients, plant enhancement ingredients, and other ingredients for consumption by a plant, animal, or human.

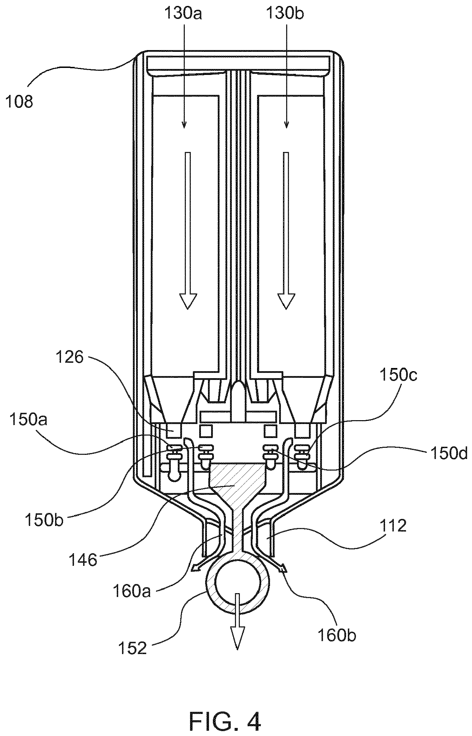

Turning now to FIG. 4, the air bleed valve 116 at the dispensing end 124 of the housing 102 permits the passage of air and nutritional composition 160a-c from the chamber cavities 130a, 130b, through the enclosed region 106 of the housing 102, and finally through the channel 112 for dispensing. This is one embodiment, in which the nutritional composition 160a-c dispenses, simply through use of gravity. Upon dispensing of the nutritional composition 160a-c from at least one of the chambers 118a-f, a combination of any composition 160a-cs may be dispensed for use by the plant.

Looking ahead to FIGs. 14 and 15, a sleeve 168 may be disposed between the housing 102 and the plurality of chambers 118a-f. The sleeve 168 forms an additional layer of integrity to the dispenser 100. In another embodiment, a membrane 166 may cover the openings 126 of the chambers 118a-f to restrict passage of nutritional composition 160a-c that dispenses from the chambers 118a-f.

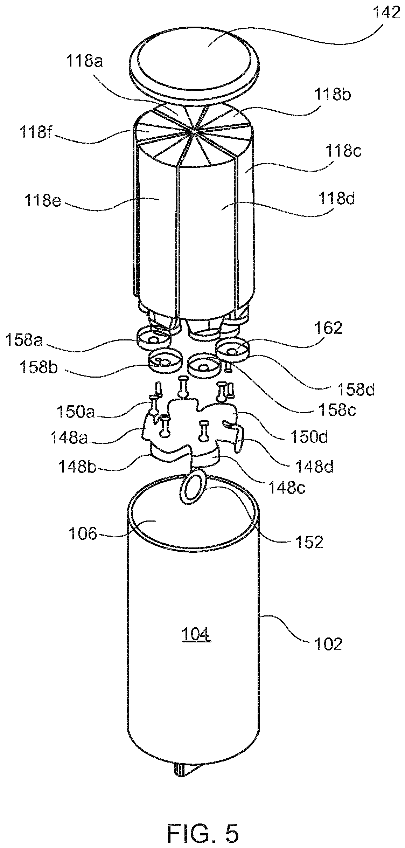

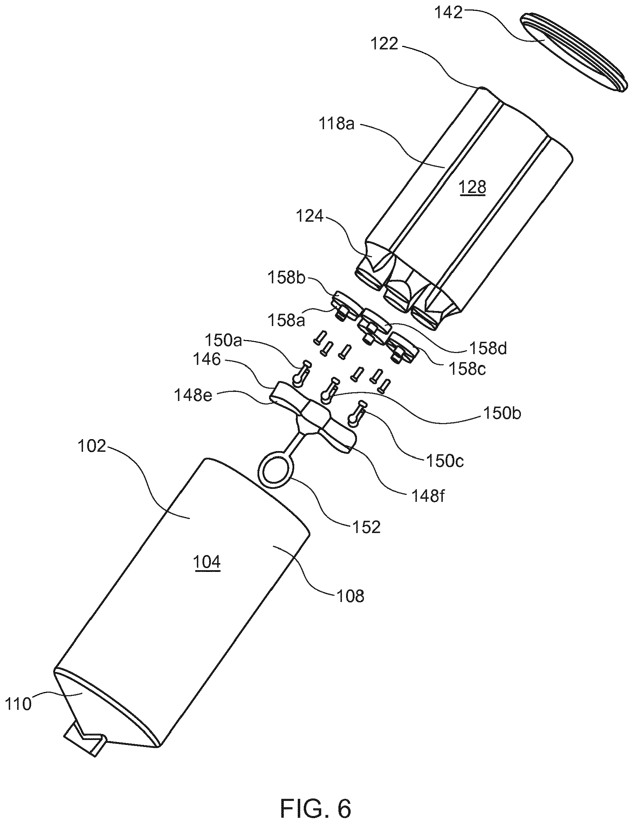

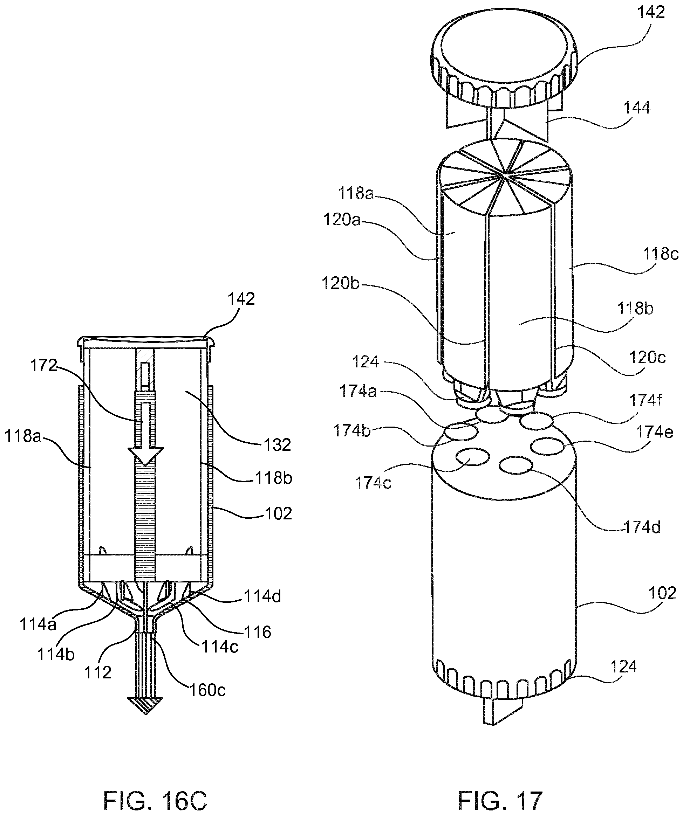

As illustrated in FIGs. 5 and 6, the membrane 166 is constructed to temporarily inhibit passage of the nutritional composition 160a-c until the membrane 166 is torn or punctured by the impaling members 114a-d that form in the housing 102. The tearing function is achieved by axially and rotatably manipulating the membrane 166 from the dispensing end 124 of the chambers 118a-f. It is interesting to note that FIG. 17 illustrates an alternative membrane, showing six individual membranes 174a-f configured to cover each opening 126 for each chamber 118a-f separately. Though in either membrane embodiment, the impaling members 114a-d work in substantially the same manner to tear the membrane.

This rotational and axial motion works to urge the membrane 166 into an agitated engagement with the impaling members 114a-d, so as to achieve the tearing function. In one embodiment, the membrane 166 may include a pliable material that is easily impaled, torn, or punctured with the impaling members 114a-d at the second end 110 of the housing 102. In one alternative embodiment, smaller, individual membranes 174a-f cover each opening of the chambers 118a-f separately. In any case, the effect is substantially the same.

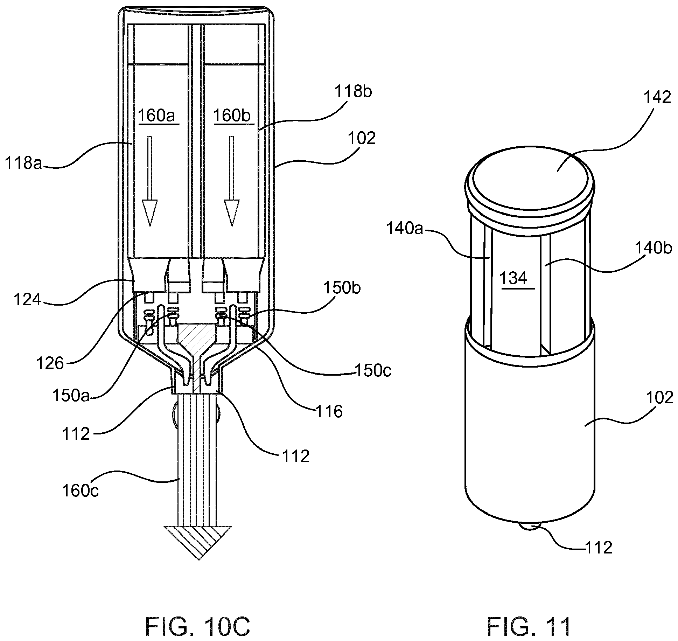

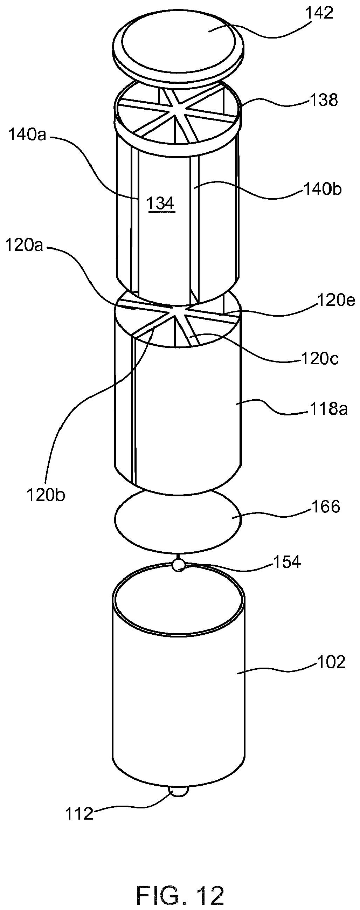

As shown in the views of FIGs. 11 and 12, the dispenser 100 provides a press 132 to forcible displace the nutritional composition 160a-c from the chambers 118a-f. The press 132 is in communication with the nutritional composition 160a-c in the chamber cavity 130a, 130b for each chamber. A downward axial force 172 may be applied to the press 132, such that the press 132 slides through the chamber cavities 130a, 130b, from the filling end 122 to the dispensing end 124. This axial displacement forces the nutritional composition 160a-cs through the openings 126 in the chambers 118a-f. Thus, both gravitational and forcible means are used to dispense the nutritional composition 160a-c.

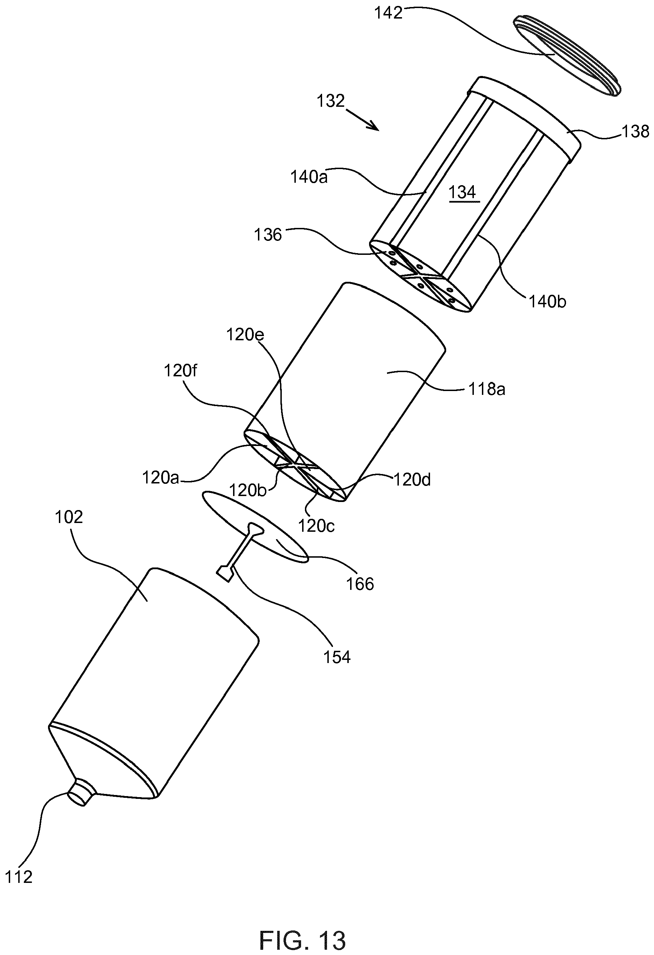

Looking at FIG. 13, the press 132 is defined by a press sidewall 134, a bottom panel 136, a cap end 138, and multiple longitudinal slots 140a, 140b extending from the bottom panel 136 to the cap end 138. The slots 140a, 140b of the press 132 are sized and dimensioned to receive, and slide along, the longitudinal dividers 120a-e that segregate the individual chambers 118a-f. This enables the press 132 to fittingly mate, and thereby control movement in the chambers 118a-f when the longitudinal dividers 120a-e are mated with corresponding longitudinal slots 140a, 140b in the chambers 118a-f.

The bottom panel 136 of the press 132 forms a snug fit with the chamber sidewall 128 to create sufficient pressure to force the nutritional composition 160a-c towards the opening in the chambers 118a-f. In this manner, axially displacing the press 132 in a downward direction forces the nutritional composition 160a-cs through the opening 126 in the chambers 118a-f.

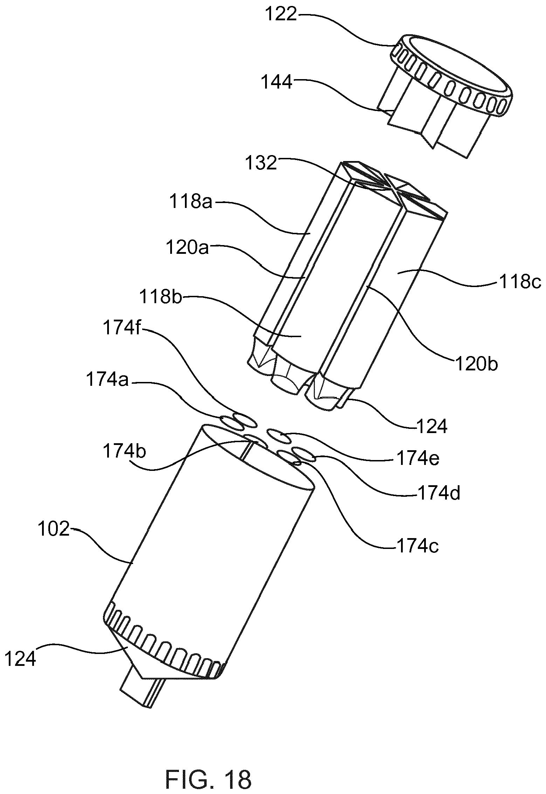

As FIG. 15 shows, a capping member 142 couples to the cap end 138 of the press 132. The capping member 142 facilitates rotational and axial manipulation of the press 132 and the chambers 118a-f. The capping member 142 also covers the first end 108 of the housing 102. As FIGs. 17 and 18 show, the capping member 142 may have multiple ridges 144 that fit into the slots 140a, 140b at the cap end 138 of the press 132. This mating relationship enables the application of a rotational torque 170 and an axial force 172 on the capping member 142, which then rotatably manipulates and axial displaces the press 132 along the chambers 118a-f. In some embodiments, the capping member 142 comprises a cap handle 164 to provide a grip for facilitated rotation of the capping member 142.

Thus, applying a rotational torque 170 and the axial force 172 to the capping member 142 rotates and axially displaces the press 132 and the plurality of chambers 118a-f. In this manner, the rotation and axial displacement of the plurality of chambers 118a-f engages the membrane 166 with the plurality of impaling members 114a-d. This consequentially works to at least partially tear the membrane 166 when the membrane 166 engages the impaling members 114a-d in this agitating manner. In one embodiment, the capping member 142 has a generally disc shape and ribs that form at the perimeter to provide grip for rotating the capping member 142.

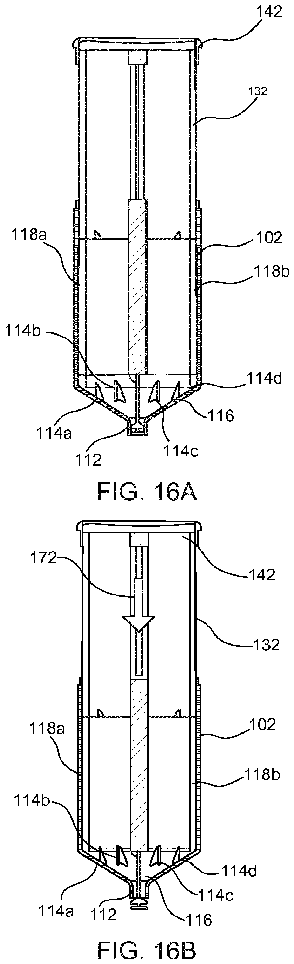

For example, FIGs. 16A, 16B, and 16C illustrate a sectioned view of the chambers 118a-f dispensing nutritional composition 160a-c as the press 132 applies an axial force 172 on the nutritional composition 160a-cs in the chambers 118a-f. FIG. 16A illustrates the press 132 in a top position, FIG. 16B illustrates the press 132 being axially displaced, and FIG. 16C illustrates the press 132 forcing a substantial amount of the nutritional composition 160a-c from the chambers 118a-f.

Consequently, this rotatable and axial manipulation of the chambers 118a-f works to tear the membrane 166 that covers the openings 126 of the chambers 118a-f. After the membrane 166 is torn, punctured, or ripped, the nutritional composition 160a-cs is free to flow through the openings 126, and through the channel 112 in the housing 102 onto the plant. However, the dispenser 100 provides yet another unique mechanism to restrict flow of the nutritional composition 160a-c after the membrane 166 has been torn - a valve assembly 146.

From the enclosed region 106 of the housing 102, the valve assembly 146 is used to selectively block and enable passage through the openings 126 in the dispensing end 124 of the chambers 118a-f. This type of regulation may be useful after the membrane 166 has been torn, and the openings 126 are not covered. The valve assembly 146 can be secured to the housing 102 by ultrasonic welding, adhesive bonding, friction and the like.

The valve assembly 146 comprises a plurality of receptacles 148 that retain a plurality of plugs 150a-f in alignment with the openings 126 in the chambers 118a-f. The valve assembly 146 further comprises a valve handle 152 that passes through the channel 112 in the housing 102. The valve handle 152 may be axially manipulated through the channel 112 to align and bring the receptacles 148 in contact with a respective openings 126 in the chambers 118a-f, or orifice 162 in the chamber caps 158a-d. In one embodiment, the valve assembly 146 has a generally circular shape that aligns with the openings 126 in the chambers 118a-f.

In some embodiments, the plugs 150a-f may be sized and dimensioned to selectively couple and decouple with their respective openings 126. Though in other embodiments, the plugs 150a-f couple and decouple with the orifices 162 in the chamber caps 158a-d that cover the openings 126. In one embodiment, the plugs 150a-f are configured to form a friction fit relationship with the openings 126 formed in the chambers 118a-f, or the orifice 162s formed in the chamber caps 158a-d.

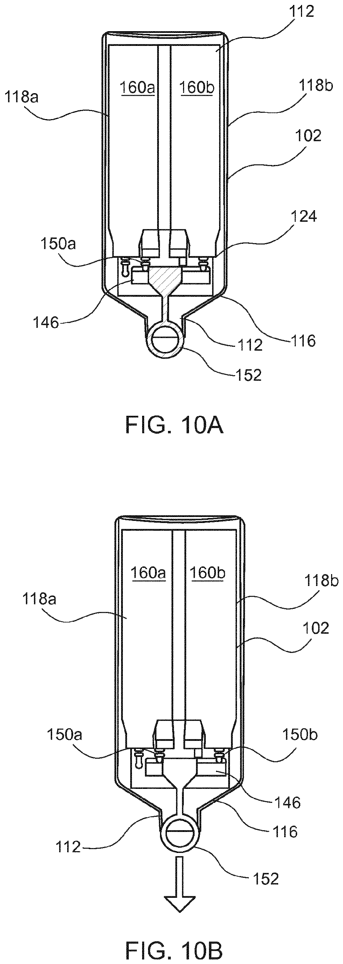

An exemplary use of the valve assembly 146 is shown in FIGs. 10A, 10B, and 10C. Here, the chambers 118a-f dispense the nutritional composition 160a-c as the valve assembly 146 is pulled through the channel 112. FIG. 10A illustrates the valve assembly 146 in the non-pulled position. FIG. 10B illustrates the valve handle 152 being pulled. And FIG. 10C illustrates the plugs 150a-f decoupling from the openings 126 in the chambers 118a-f.

Thus aligning and coupling the plugs 150a-f with the openings 126 of the chambers 118a-f, or the orifice 162s in the chamber caps 158a-d works to at least partially restrict passage of nutritional composition 160a-c through the openings 126. In operation, the valve handle 152 is pulled to decouple the plugs 150a-f from the openings 126. This enables the nutritional composition 160a-c to dispense from the opening 126. Reversibly, the valve handle 152 is pushed into the channel 112 to couple the plugs 150a-f with the respective openings 126, so as to restrict flow of the nutritional composition 160a-c.

In this manner, the plugs 150a-f work to restrict and enable flowage of the nutritional compositions 160a-c through the openings 126 in the chambers 118a-f, through the channel 112 in the housing 102, and finally onto the plant. In some embodiments, the plugs 150a-f may include elongated rubber stops that fully mate with the orifice 162s in the chamber caps 158a-d.

In yet another embodiment that is illustrated in FIG. 13, the dispenser 100 comprises a valve plunger 154 disposed between the membrane 166 and the second end 110 of the housing 102. The valve plunger 154 is configured to at least partially block passage through the channel 112 in the housing 102. In operation, the valve plunger 154 may be pulled out through the channel 112 in the housing 102, or pushed out by the chambers 118a-f, which causes the membrane 166 to puncture.

As discussed above, the housing 102 and the chambers 118a-f of the present invention may take multiple shapes and dimensions, since the dispenser 100 is scalable. FIG. 19 illustrates a perspective view of an alternative embodiment of a plant irrigation dispenser 200, showing a housing 202 having a cubicle shape and a plurality of chambers 218a-f defined by a generally rectangular or square shape. The chambers 218a-f are configured into a linear arrangement, rather than the radial arrangement of the above mentioned chambers 118a-f.

Correspondingly, the valve assembly 246 is shaped linearly to accommodate the linear arrangement of chambers 218a-f, and thereby align with the openings 226. This alternative embodiment of dispenser 200 operates in substantially the same manner as the cylindrically shaped version of the dispenser 100.

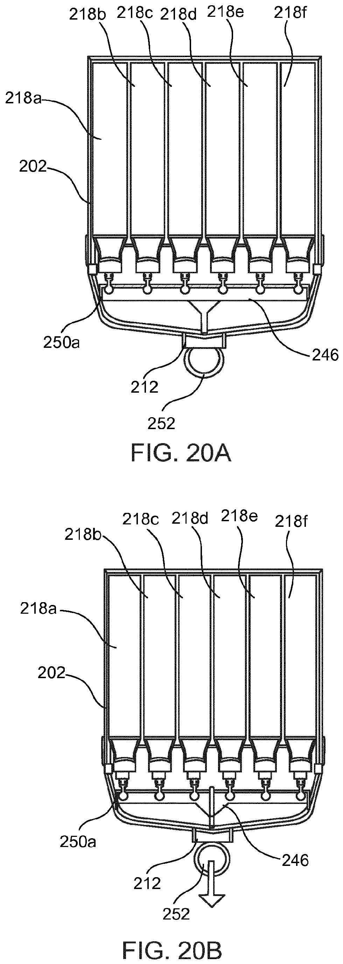

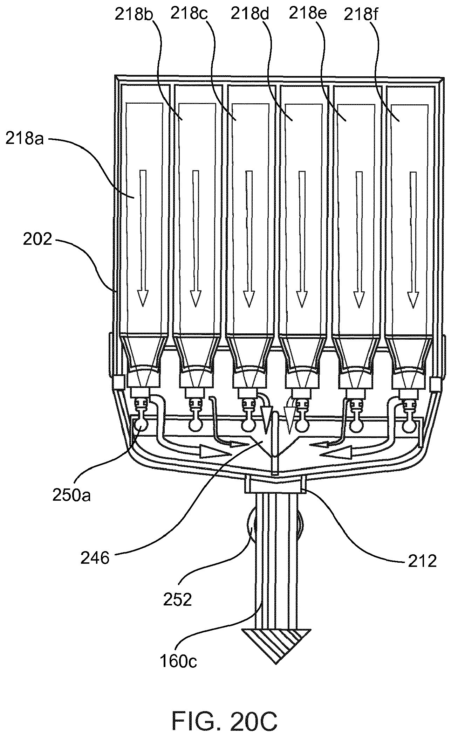

FIGs. 20A, 20B, and 20C illustrate sectioned views of the alternative embodiment of the plant irrigation dispenser 200, showing the nutritional composition 160a-c being dispensed, where FIG. 20A is the valve assembly 246 in the non-pulled position, FIG. 20B shows the valve handle 252 being pulled, and FIG. 20C shows the plugs 250a-f decoupling from the openings 226 in the chambers 218a-f. In yet another alternative embodiment, a linear arrangement of square-shaped presses may be used to displace the composition 160a-c through the chambers 218a-f.

In some embodiments, the various components of the dispenser can be constructed by various processes, including, but not limited to, blow molding, roto molding and/or gas assisted injection molding (i.e., outer capping member, inner container), injection molding (i.e., outer press, housing, valve plunger), and the like.

In other embodiments, the various components of the dispenser can be fabricated of the following materials: high-density polyethylene (HDPE), polyethylene (PE), polypropylene (PP) (i.e., capping member, chamber, impaling members) and styrene (i.e., capping member); PP, acrylonitrile butadiene styrene (ABS), and polycarbonate (PC) (i.e., press, housing, impaling members); and PP, Delrin, urethane, rubber, thermoplastic rubber, silicon (i.e., plugs).

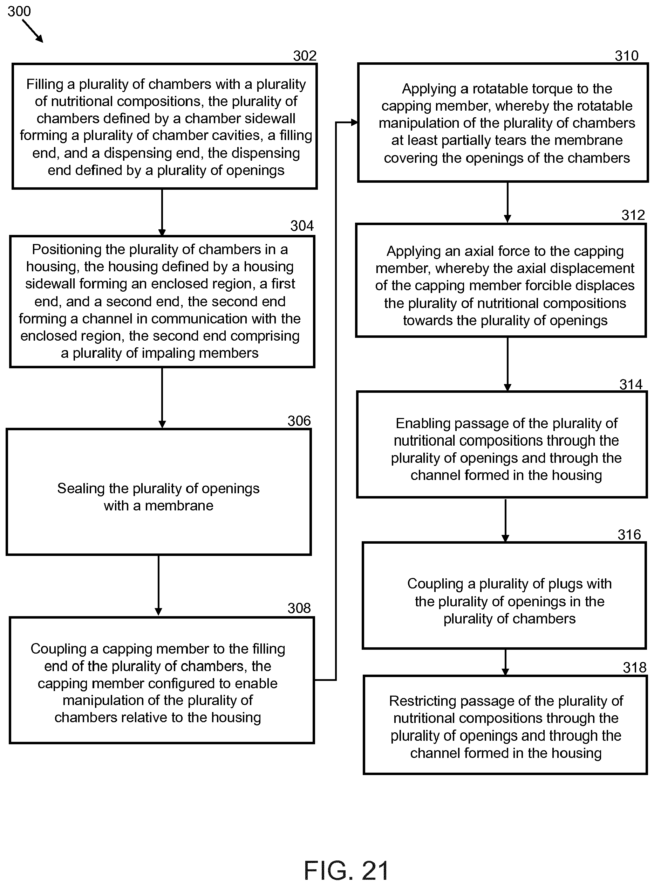

FIG. 21 references a flowchart for an exemplary method 300 for dispensing a nutritional composition from a plant irrigation dispenser. The method 300 may include an initial Step 302 of filling a plurality of chambers 118a-f with a plurality of nutritional compositions, the plurality of chambers defined by a chamber sidewall forming a plurality of chamber cavities, a filling end, and a dispensing end, the dispensing end defined by a plurality of openings.

The method 300 may further comprise a Step 304 of positioning the plurality of chambers in a housing 102, the housing defined by a housing sidewall forming an enclosed region, a first end, and a second end, the second end forming a channel in communication with the enclosed region, the second end comprising a plurality of impaling members. A Step 306 includes sealing the plurality of openings with a membrane.

In some embodiments the method 300 may include a Step 308 of coupling a capping member 142 to the filling end of the plurality of chambers, the capping member configured to enable manipulation of the plurality of chambers relative to the housing. A Step 310 includes applying a rotatable torque to the capping member, whereby the rotatable manipulation of the plurality of chambers at least partially tears the membrane covering the openings of the chambers.

In some embodiments the method 300 may include a Step 312 of applying an axial force to the capping member, whereby the axial displacement of the capping member forcible displaces the plurality of nutritional compositions towards the plurality of openings. A Step 314 comprises enabling passage of the plurality of nutritional compositions through the plurality of openings and through the channel formed in the housing. Another Step 316 comprises coupling a plurality of plugs 150a-f with the plurality of openings in the plurality of chambers. A final Step 318 includes restricting passage of the plurality of nutritional compositions through the plurality of openings and through the channel formed in the housing.

These and other advantages of the invention will be further understood and appreciated by those skilled in the art by reference to the following written specification, claims and appended drawings.

Because many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims and their legal equivalence.

## Claims

1. A plant irrigation dispenser, the dispenser comprising:
a housing defined by a housing sidewall forming an enclosed region, a first end, and a second end, the second end forming a channel in communication with the enclosed region, the housing sidewall defined by an air bleed valve configured to enable passage of air into the enclosed region of the housing;
a plurality of impaling members disposed at the second end of the housing;
a plurality of chambers substantially encased in the enclosed region of the housing, the plurality of chambers defined by a chamber sidewall forming a plurality of chamber cavities, a filling end, and a dispensing end, the dispensing end of the plurality of chambers defined by a plurality of openings, the plurality of chambers further defined by multiple longitudinal dividers segregating each chamber;
a membrane disposed to at least partially cover the plurality of openings of the plurality of chambers; and
a valve assembly defined by a valve handle and a plurality of receptacles, the plurality of receptacles configured to retain a plurality of plugs, the plurality of plugs configured to align with and form a snug mating relationship with the plurality of openings, whereby mating the plurality of plugs with the plurality of openings of the plurality of chambers at least partially restricts passage through the plurality of openings.

2. The dispenser of claim 1 further comprising a press configured to slide along the length of the plurality of chamber cavities, the press defined by a press sidewall, a bottom panel, a cap end, and multiple longitudinal slots extending at least partially from the bottom panel to the cap end, the multiple longitudinal slots being configured to receive and slide along the multiple longitudinal dividers segregating each chamber, whereby the axial force displaces the press through the plurality of chamber cavities.

3. The dispenser of claim 2 further comprising a capping member detachably coupled to the cap end of the press, the capping member comprising multiple ridges that mate with the multiple longitudinal slots at the cap end of the press, whereby applying a rotational torque and the axial force to the capping member rotates and axially displaces the press and the plurality of chambers, whereby the rotation and axial displacement of the plurality of chambers engages the membrane with the plurality of impaling members, whereby the membrane is configured to at least partially tear when the membrane engages the plurality of impaling members.

4. A plant irrigation dispenser, the dispenser comprising:
a housing defined by a housing sidewall forming an enclosed region, a first end, and a second end, the second end forming a channel in communication with the enclosed region, the housing sidewall defined by an air bleed valve configured to enable passage of air into the enclosed region of the housing;
a plurality of impaling members disposed at the second end of the housing;
a plurality of chambers substantially encased in the enclosed region of the housing, the plurality of chambers defined by a chamber sidewall forming a plurality of chamber cavities, a filling end, and a dispensing end, the dispensing end of the plurality of chambers defined by a plurality of openings, the plurality of chambers further defined by multiple longitudinal dividers segregating each chamber;
a membrane disposed to at least partially cover the plurality of openings of the plurality of chambers;
a press configured to slide along the length of the plurality of chamber cavities, the press defined by a press sidewall, a bottom panel, a cap end, and multiple longitudinal slots extending at least partially from the bottom panel to the cap end, the multiple longitudinal slots being configured to receive and slide along the multiple longitudinal dividers segregating each chamber,
whereby an axial force displaces the press through the plurality of chamber cavities;
a capping member detachably coupled to the cap end of the press, the capping member comprising multiple ridges that mate with the multiple longitudinal slots at the cap end of the press,
whereby applying a rotational torque and the axial force to the capping member rotates and axially displaces the press and the plurality of chambers,
whereby the rotation and axial displacement of the plurality of chambers engages the membrane with the plurality of impaling members,
whereby the membrane is configured to at least partially tear when the membrane engages the plurality of impaling members; and
a valve assembly defined by a valve handle and a plurality of receptacles, the plurality of receptacles configured to retain a plurality of plugs, the plurality of plugs configured to align with and form a snug mating relationship with the plurality of openings,
whereby mating the plurality of plugs with the plurality of openings of the plurality of chambers at least partially restricts passage through the plurality of openings.

5. The dispenser of claim 4, wherein the plurality of impaling members comprise spikes oriented towards the first end of the housing.

6. The dispenser of claim 4 or claim 5, wherein the plurality of chambers comprises six cylindrically shaped chambers arranged in a radial arrangement and/or
wherein the plurality of chambers comprises six generally square shaped chambers arranged in a linear arrangement and/or
wherein the plurality of chamber cavities are configured to contain a plurality of nutritional compositions.

7. The dispenser of any of claims 4 to 6, further comprising a sleeve disposed between the housing and the plurality of chambers.

8. The dispenser of any of claims 4 to 7, wherein the capping member comprises a cap handle configured to facilitate rotation of the capping member and/or
wherein the capping member has a generally disc-shape.

9. The dispenser of any of claims 4 to 8, wherein the valve assembly comprises a valve handle and/or
wherein the valve assembly comprises a plurality of receptacles configured to retain the plurality of plugs.

10. The dispenser of any of claims 4 to 9, wherein the valve assembly has a generally circular shape that aligns with the plurality of openings in the dispensing end of the plurality of chambers.

11. The dispenser of any of claims 4 to 10, wherein the plurality of plugs are configured to form a friction fit relationship with the plurality of openings formed in the dispensing end of the plurality of chambers.

12. The dispenser of any of claims 4 to 11, further comprising a plurality of chamber caps configured to detachably attach to the plurality of openings, the plurality of chamber caps defined by an orifice and, optionally,
wherein the plurality of plugs are configured to form a friction fit relationship with the orifice of the plurality of chamber caps.

13. The dispenser of any of claims 4 to 12, further comprising a valve plunger disposed between the membrane and the second end of the housing, the valve plunger configured to at least partially block passage through the channel in the housing.

14. The dispenser of any of claims 4 to 13, wherein the membrane comprises six individual membranes configured to cover each opening for each chamber separately.

15. A method for dispensing a nutritional composition from a plant irrigation dispenser, the method comprising:
filling a plurality of chambers with a plurality of nutritional compositions, the plurality of chambers defined by a chamber sidewall forming a plurality of chamber cavities, a filling end, and a dispensing end, the dispensing end defined by a plurality of openings;
positioning the plurality of chambers in a housing, the housing defined by a housing sidewall forming an enclosed region, a first end, and a second end, the second end forming a channel in communication with the enclosed region, the second end comprising a plurality of impaling members;
sealing the plurality of openings with a membrane;
coupling a capping member to the filling end of the plurality of chambers, the capping member configured to enable manipulation of the plurality of chambers relative to the housing;
applying a rotatable torque to the capping member, whereby the rotatable manipulation of the plurality of chambers at least partially tears the membrane covering the openings of the chambers;
applying an axial force to the capping member, whereby the axial displacement of the capping member forcible displaces the plurality of nutritional compositions towards the plurality of openings;
enabling passage of the plurality of nutritional compositions through the plurality of openings and through the channel formed in the housing;
coupling a plurality of plugs with the plurality of openings in the plurality of chambers; and
restricting passage of the plurality of nutritional compositions through the plurality of openings and through the channel formed in the housing.
